Europäisches Patentamt

(19) European Patent Office

Office européen des brevets

(11) Publication number: **0 091 145**
**B1**

(12) **EUROPEAN PATENT SPECIFICATION**

(45) Date of publication of patent specification: **16.09.87**

(21) Application number: **83200365.1**

(22) Date of filing: **16.03.83**

(51) Int. Cl.⁴: **A 47 J 37/06**

(54) **Grill.**

(30) Priority: **06.04.82 BE 207768**

(43) Date of publication of application:
**12.10.83 Bulletin 83/41**

(45) Publication of the grant of the patent:
**16.09.87 Bulletin 87/38**

(84) Designated Contracting States:
**AT CH DE FR GB IT LI LU NL SE**

(56) References cited:
**DE-A-2 917 071**
**FR-A- 445 186**
**GB-A-1 564 972**
**GB-A-2 029 200**
**US-A-3 174 863**

(73) Proprietor: **Werkhuizen Rubbens naamloze**
**vennootschap**
**Jan Breydelstraat 80**
**B-2600 Berchem (BE)**

(72) Inventor: **Rubbens, Georges**
**Jan Breydelstraat 80**
**B-2600 Berchem (BE)**

(74) Representative: **Pieraerts, Jacques et al**
**Bureau Gevers S.A. rue de Livourne 7, Bte. 1**
**B-1050 Bruxelles (BE)**

Courier Press, Leamington Spa, England.

## Description

This invention relates to a method for roasting comestibles, more particularly meats, on a grill above a tank containing water.

Grills fitted with a series of electric resistors or an electric hot plate are known. Meat or possibly fish may be roasted with such devices without adding fat, which may be considered as an advantage from a medical or hygienic point of view.

Meat prepared with such devices or grills dries out easily, which may be considered as a heavy drawback. This phenomenom does not enhance the spreading or generalizing of such roasting methods or devices or similar.

In some cases, it has been foreseen to provide the grill with a receptacle for water placed underneath the meat to be grilled or roasted.

Fat dripping from the food drops into the water trag or receptacle so that meat can be grilled smokeless and flameless. A structure of this type was proposed by GB—A—2.099.200 and US—A—3,174,863. Also DE—A—2.917.071 discloses a reference which is supposed to contain water.

However, the possibility of producing steam while roasting the meat was not really considered and it is an object of the present invention to provide a method allowing meat or, more generally, comestibles resting on electric resistors to be grilled under conditions which give rise to products which cannot be compared with conventional roasting or grilled foods.

The invention has for an object to provide a method which obviates the drawback of known grilling methods and apparatus and which does not only make it possible to roast the comestibles without adding fat, but also to avoid drying-out or part burning thereof.

For this purpose, the method according to the invention is characterized by placing the comestibles upon a series of electric resistors and by adjusting the position of said resistors above the water level in the tank, so as to generate water vapor by heating the water such that the meat structure is influenced.

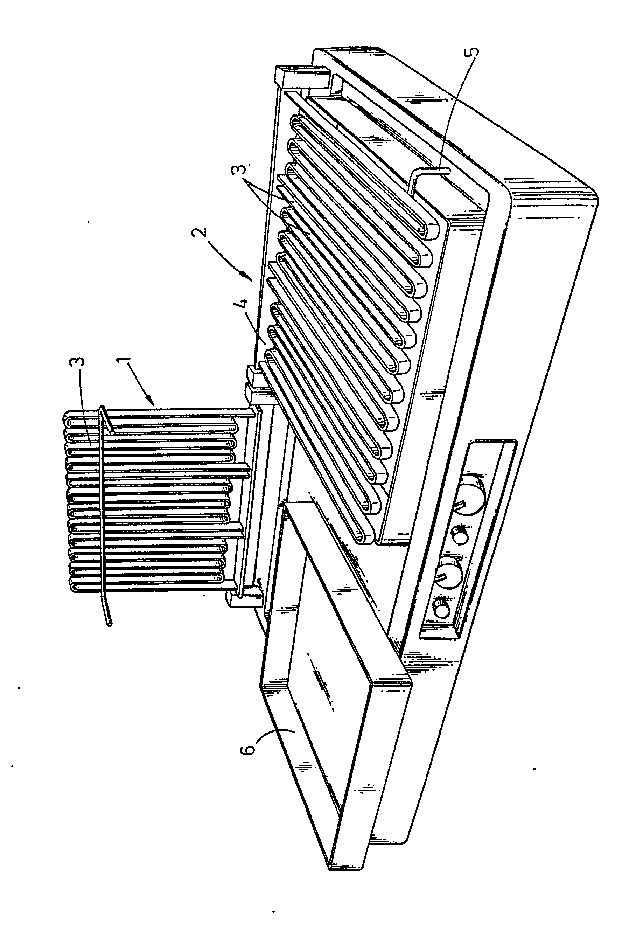

Other details and advantages of the invention will stand out from the following description given by way of non-limitative example and with reference to the accompanying drawing.

The single figure in the drawing is a perspective showing of an apparatus designed for carrying out the method according to the invention, fitted with two grills, whereby the one grill lies in the operating position, while the other one has been rotated to the vertical position.

The apparatus as shown in the figure is fitted with two grills 1 and 2 which have the same structure. Said grills are comprised of a series of heating resistors 3 which are mounted on a rotatable component 4.

The horizontal adjustment of the grills is obtained automatically due to the presence of supports 5 which come to bear in the operating position of the grills, against the casing of the apparatus.

Underneath each grill is provided a tank 6 which is filled with water. The level of said water should be high enough to let the heating resistors heat up the water to generate water vapor or steam, which is characteristic for the method according to the invention. Such water vapors have an advantageous influence on the roasting of meat, by preventing part burning and drying-out thereof. The generated vapors result in the comestibles and more particularly the meat swelling during the roasting, which was not possible up to now when using apparatus fitted with rod-like resistors arranged above a so-called water kay placed at such a distance from the electric resistors so that no steam, nor vapor will be generated.

The maintenance and cleaning of the resistors are also favourably influenced by the hot water vapors. Indeed, the meat does not adhere any more or any way less strongly to the metal the resistors are made of, and scraps which would still be baked on said components are easily removed.

It is of course important that the distance between the water-level and the resistors on which the comestibles rest is kept small enough to allow steam to be generated in an amount which will really influence the structure of the comestibles, particularly meat resting on the resistors.

The method according to the invention is clearly characterized by creating a moisture rich environment. The influence of the so generated vapor on the structure of meat of other comestibles appears to have been unknown in the world of boiling or roasting apparatus.

It is clear that the method according to the invention is not limited to the above embodiment and that many changes may be brought thereto without departing from the scope of the invention as defined by the appended claim.

For instance, producing the required steam may be obtained by heating resistors which have not all the shape shown in the figure and they do not have either to swing about a horizontal axis. The method according to the invention could make use of any heating auxiliary system capable of developing the required amount of steam.

## Claim

Method for roasting comestibles, more particularly meats, on a grill above a tank (6) containing water, characterized by placing the comestibles upon a series of electric resistors (3) and by adjusting the position of said resistors (3) above the water-level in the tank (6), so as to generate water vapor by heating the water such that the meat structure is influenced.

## Patentanspruch

Verfahren zum Braten von Nahrungsmitteln, insbesondere von Fleisch, auf einem Grill oberhalb eines Behälters (6), in welchem Wasser enthalten ist, dadurch gekennzeichnet, daß die Nahrungsmittel auf einer Reihe elektrischer Widerstände (3) angeordnet werden und daß die Position der Widerstände (3) über dem Wasserspiegel in dem Behälter (6) so eingestellt wird, daß Wasserdampf durch Aufheizen des Wassers erzeugt wird, so daß auf die Fleischstruktur eingewirkt wird.

**Revendication**

Procédé permettant de rôtir des comestibles, plus particulièrement des viandes sur un gril disposé au-dessus d'un récipient (6) contenant de l'eau, caractérisé en ce qu'on place les comestibles sur une série de résistances électriques (3) et en ce qu'on ajuste la position desdites résistances (3) au-dessus du niveau de l'eau dans le récipient (6) de manière à provoquer de la vapeur d'eau en chauffant l'eau de telle sorte que la structure de la viande est influencée.